# EUROPÄISCHE PATENTSCHRIFT

(11) **EP 0 532 544 B1**
(45) Veröffentlichungstag und Bekanntmachung des Hinweises auf die Patenterteilung: **07.12.1994**
(21) Anmeldenummer: 91909905.1
(22) Anmeldetag: 29.05.1991
(51) Int. Cl.: B24C 9/00, B24C 11/00, B24C 3/32, G21F 9/00

(54) **VERFAHREN UND VORRICHTUNG ZUR DEKONTAMINATION RADIOAKTIV KONTAMINIERTER OBERFLÄCHEN**
PROCESS AND DEVICE FOR DECONTAMINATING SURFACES CONTAMINATED WITH RADIOACTIVITY
PROCEDE ET DISPOSITIF POUR LA DECONTAMINATION DE SURFACES CONTAMINEES RADIOACTIVES

(30) Priorität: 05.06.1990 DE 4017998
(43) Veröffentlichungstag der Anmeldung: 24.03.1993
(73) Patentinhaber: SIEMENS AKTIENGESELLSCHAFT, 80333 München (DE)
(72) Erfinder: OPERSCHALL, Hermann, D-8560 Lauf (DE); FRIEDRICH, Irene, D-8520 Erlangen (DE); SEEBERGER, Erich, D-8521 Grossenseebach (DE); KÜHLWEIN, Karl, D-8521 Weisendorf (DE)
(86) Internationale Anmeldenummer: DE9100460
(87) Internationale Veröffentlichungsnummer: WO9118712

(56) Entgegenhaltungen:
- EP-A- 0 039 667
- EP-A- 0 047 047
- CH-A- 0 489 333
- CH-A-00 382 016
- CH-A-04 108 30
- DE-A- 2 043 116
- DE-A- 3 408 828
- DE-A- 3 711 826
- DE-B- 1 031 172
- DE-B- 1 173 235
- GB-A- 0 874 720
- GB-A-22 212 74
- US-A- 2 348 505
- US-A- 3 485 671
- US-A- 4 603 515
- US-A- 4 993 200
- US-A-35 719 85
- PATENT ABSTRACTS OF JAPAN, (M-77)(1994) & JP-A-5228794 (HEIZABURO SHIITANI) 3 March 1977
- PATENT ABSTRACTS OF JAPAN, Vol. 9, no. 30 (P-333)(1753), ( February 1985 & JP-A-59174735 (TOSHIBA K.K.) 3 October 1984
- PATENT ABSTRACTS OF JAPAN, vol. 9, no. 80 (M-370)(1803), 10 April 1985 & JP-A-59209765 (KIYOSHI KAWASAKI) 28 November 1984
- PATENT ABSTRACTS OF JAPAN; (M-77)(8083) & JP-A-52154195 (HITACHI ZOSEN K:K.) 21 December 1977

## Beschreibung

Die Erfindung bezieht sich auf ein Verfahren zur Dekontamination radioaktiv kontaminierter Oberflächen. Außerdem sind Vorrichtungen zur Durchführung des Verfahrens angegeben.

Bei Reparatur- und Prüfarbeiten an Anlagenteilen einer kerntechnischen Anlage können radioaktiv kontaminierte Oberflächen zu einer hohen Strahlenbelastung des Wartungspersonals führen. Um die Strahlenexposition möglichst niedrig zu halten, ist es erforderlich, diese Oberflächen vor Durchführung der Wartungsarbeiten zu dekontaminieren. So besteht beispielsweise beim Austausch von Dampferzeugern in Kernkraftwerken die Notwendigkeit freiliegende Innenflächen von stationären Loopleitungen vor Beginn der Schweißarbeiten zu dekontaminieren.

Zur Reinigung von Anlagenteilen in kerntechnischen Anlagen sind Verfahren bekannt, bei denen die Oberflächen der zu reinigenden Objekte mit Strahlmittel behandelt werden. Das gegen die Objekte geblasene Strahlmittel führt zu einem Abtrag radioaktiver Teilchen, die als Staubpartikel oder Aerosole anfallen und sich in der Umgebung ausbreiten können.

Zur Vermeidung von Aerosolbildung sind deshalb Naßstrahlverfahren vorgeschlagen worden, bei denen die von der Oberfläche abgetragenen Teilchen an eine dem Strahlmittel beigefügte Komponente gebunden werden, so daß eine Aerosolbildung vermieden wird. Aus der EP-B-00 18 152 ist beispielsweise ein Naß- Strahlverfahren bekannt, bei dem die Oberfläche einem mit Festpartikeln versetzten Wasserstrahl ausgesetzt wird. Die von der Oberfläche abgetragenen Teilchen werden dann zusammen mit den Festpartikeln vom Wasserstrahl weggeschwemmt und können in einem Behälter aufgefangen werden.

Aus der DE-A-34 29 700 ist ein Strahlverfahren bekannt, bei dem die Oberfläche mit Trockeneis bestrahlt wird, dem ein oberflächenaktives Agens, beispielsweise Eispartikel oder Alkohol, beigemischt ist. Dieses oberflächenaktive Agens soll ein Verbreiten von radioaktiven Aerosolen verhindern.

Auch bei den bekannten Verfahren läßt sich jedoch die Aerosolbildung nicht vollständig vermeiden. Darüber hinaus ist die Effektivität der Strahlbehandlung verringert, da das abrasiv wirksame Strahlmittel im gesamten Strahlgut nur in niedriger Konzentration vorliegt. Außerdem fällt eine große Menge radioaktiv kontaminierten Schlammes an, der nur mit hohem Aufwand entsorgt werden kann.

Aus der JP-A-59 174 735 ist ein Verfahren zur Dekontamination radioaktiv kontaminierter Oberflächen bekannt, bei dem das zu dekontaminierende Werkstück in eine abgeschlossene Kammer eingebracht wird und dort mit Glaspartikeln bestrahlt wird. Das bekannte Verfahren ist jedoch bei der Dekontamination stationärer Anlagenteile nicht anwendbar.

Für die Reinigung von lüftungstechnischen Anlagenteilen ist in der DE-A1-34 08 828 ein trockenes mechanisches Strahlverfahren vorgeschlagen worden, bei dem ein Strahlkopf in einem Lüftungsschacht eingebracht wird. Mit Hilfe von Dichtscheiben wird zwar das Übertreten von Staub in die übrigen Anlagenteile vermieden, der Austritt von Staub in die Umgebung wird aber nur unzureichend verhindert, so daß das bekannte Verfahren für radioaktiv kontaminierte Anlagenteile nicht geeignet ist.

Der Erfindung liegt nun die Aufgabe zugrunde, ein Verfahren zur Dekontamination eines radioaktiv kontaminierten Oberflächenbereiches anzugeben, mit dem ein Abtrag der radioaktiv kontaminierten Oberflächenschicht wirksam und schnell durchgeführt werden kann und bei dem die Ausbreitung radioaktiver Aerosole in der Umgebung verhindert wird. Darüber hinaus soll das Volumen des anfallenden radioaktiven Abfalles möglichst gering sein. Der Erfindung liegt außerdem die Aufgabe zugrunde, eine geeignete Vorrichtung zur Durchführung des Verfahrens anzugeben.

Die genannten Aufgaben werden erfindungsgemäß gelöst mit den Merkmalen der Ansprüche 1 bzw. 4.

Da zur Strahlbehandlung ein trockenes mechanisches Strahlmittel verwendet wird, ist ein wirksamer und schneller Oberflächenabtrag gewährleistet.

Da der zu dekontaminierende Oberflächenbereich während der Strahlbehandlung von einer nach außen staubdicht abgeschlossenen Kammer umgeben ist, und eine mit Druckgas betriebene und nach außen staubdicht abgeschlossene Strahlanlage zum Einsatz kommt, wird eine Ausbreitung radioaktiver Aerosole in die Umgebung verhindert. Durch die in der Strahlanlage durchgeführte Strahlmittelrückgewinnung wird außerdem die Menge des anfallenden radioaktiv kontaminierten Abfalls verringert und die Aktivität konzentriert.

Die Strahlbehandlung wird bei einem in der Kammer herrschenden Unterdruck durchgeführt. Dies wird dadurch erreicht, daß der Saugstrom auf einen höheren Wert eingestellt wird als der Druckgasstrom. Da sich an möglichen Leckagen bei einem in der Kammer herrschenden Unterdruck immer eine gerichtete Strömung ins Innere der Kammer ergibt, wird verhindert, daß bei eventuellen Leckagen an Dichtungen oder Durchführungen Kontamination aus der Kammer nach außen gelangt.

Die Strahlbehandlung umfaßt vorzugsweise zwei Verfahrensschritte. In einem ersten Verfahrensschritt wird mit einem kantigen Strahlmittel, beispielsweise Korund mit einer Korngröße von 100 bis 300 µm, gestrahlt, um eine Dekontaminationswirkung durch Obeflächenabtrag zu erzeugen. Abgetragen wird dabei im wesentlichen die Oxidhaut, die Träger der radioaktiven Kontamination ist. Die zur wirksamen Dekontamination erforderliche Abtragtiefe beträgt etwa 5 bis 10 µm. In einem zweiten Verfahrensschritt wird dann mit einem kugeligen Strahlmittel, beispielsweise Glas, rostfreier Stahl oder Nickellegierungen gestrahlt, um eine Glättung der Oberfläche zu erzielen.

Bei der Dekontamination der Innenwand eines mit einer Rohrleitung verbundenen und an einem Ende offenen Rohrstutzens wird zum Abdichten der Rohrleitung gegenüber dem Rohrstutzen ein Dichtelement in die Rohrleitung eingeführt. Dadurch wird das Ausbreiten radioaktiver Aerosole und des Strahlmittels in das Innere der Rohrleitung verhindert. Auf die Stirnfläche des Rohrstutzens wird eine Bearbeitungsglocke aufgesetzt, die das Ausbreiten von Aerosolen in dem Außenraum verhindert. Diese Bearbeitungsglocke enthält Durchführungen für die zur Absaugung und zur Zuführung des Strahlmittels erforderlichen Saug- bzw. Druckleitungen sowie die zur Bewegung eines einen Strahlkopf enthaltenden und innerhalb des Rohrstutzens bewegbaren Manipulators erforderlichen Mittel.

Eine erfindungsgemäße Vorrichtung zur mechanischen Strahlbehandlung eines Oberflächenbereiches, der sich im Innern eines an einem Ende offenen Rohres oder Behälters befindet, enthält einen im Innern des Rohres oder Behälters bewegbaren Manipulator mit einem Strahlkopf mit wenigstens einer Strahldüse. Der Strahlkopf ist über eine Druckleitung mit einer nach außen staubdicht abgeschlossenen und mit Druckgas betreibbaren Strahlanlage mit geschlossenem Strahlmittelkreislauf verbunden. Darüber hinaus enthält die Vorrichtung Mittel zum Herstellen einer den Oberflächenbereich enthaltenden staubdichten und über eine Saugleitung mit der Strahlanlage verbundenen Kammer.

Die Strahlanlage enthält eine Absaugvorrichtung mit einem Abscheider zur Trennung des abgesaugten Materials in zwei Fraktionen mit unterschiedlicher Korngrößenverteilung. Als Abscheider ist in einer bevorzugten Ausführungsform der Erfindung ein Zyklon vorgesehen.

Zur Erzeugung eines zum Absaugen erforderlichen Unterdrucks ist ein mit Druckluft betriebener Injektor oder ein Gebläse vorgesehen.

Das Abdichten des zu behandelnden Rohres oder Behälters erfolgt durch eine auf das offene Ende staubdicht aufsetzbare Bearbeitungsglocke, die in einer weiteren Ausgestaltung eine mit einem Filter versehene Belüftungsöffnung enthält. Durch diese Maßnahme wird bei einer Fehlbedienung der Strahlanlage, beispielsweise bei einer Fehleinstellung des Saug- und Druckgasstromes, der Aufbau eines zu hohen Überdruckes in der Kammer verhindert und Kontamination am Filter zurückgehalten.

Als bewegbarer Manipulator ist in einer Ausgestaltung der Erfindung ein axial verschiebbares und mit der Druckleitung verbundenes Rohr vorgesehen, das an dem in der Kammer befindlichen Ende einen Strahlkopf enthält. Diese Ausführungsform ist insbesondere für Rohr- oder Behälterabschnitte mit geradlinig verlaufender Mittenachse geeignet.

In einer weiteren Ausgestaltung der Erfindung ist ein auf Rädern innerhalb des Rohres oder Behälters fahrbarer Manipulator vorgesehen, der einen drehbaren Strahlkopf enthält. Mit einem solchen Manipulator können auch Oberflächen gestrahlt werden, die sich im Innern von gekrümmten Rohren befinden.

In einer besonders bevorzugten Ausführungsform ist ein auf einer hohlen Führungsschiene in Richtung ihrer Längsachse verschiebbar angeordneter Manipulator vorgesehen, der einen Strahlkopf mit wenigstens einer Strahldüse enthält, wobei der Strahlkopf auf dem Manipulator drehbar um die Längsachse der Führungsschiene angeordnet ist. Die Führungsschiene ist an ihrem einen Ende offen und an ihrem anderen Ende mit der Absaugvorrichtung verbunden. Die Führungsschiene ist beispielsweise ein mit einer Zahnstange versehenes Rohr, auf dem der Dekontaminationsmanipulator elektrisch oder pneumatisch über Ritzel vorwärts bzw. rückwärts bewegt wird. Vorzugsweise ist jedoch eine Führungsschiene mit einem Hohlprofil vorgesehen, die zwei einander gegenüberliegende Flachseiten hat, um einen auf Rollen fahrbaren Manipulator aufzunehmen, dessen Rollen mit Federn an diese Flachseiten angepreßt werden.

Ein auf einer zentralen Führungsschiene geführter Manipulator hat den Vorteil, daß die Innenoberfläche des Behälters oder Rohres hinsichtlich ihrer Krümmung, ihrer Ovalität, ihren Durchmessertoleranzen, ihrer Konizität und ihrer Gußstruktur keinen oder nur einen geringen Einfluß hat. Darüber hinaus kann derselbe Manipulator Rohre mit verschiedenen Nennweiten strahlen. Für Rohre mit unterschiedlichem Krümmungsverlauf muß lediglich die Führungsschiene entsprechend angepaßt werden. Außerdem können auch Rohre mit Durchmesserstufen, beispielsweise Erweiterungen oder Verengungen, gestrahlt werden. Die gute Anpassungsfähigkeit an Rohre mit unterschiedlichen Nennweiten und die effektive Dekontamination führt sowohl bei der Installation als auch bei der Dekontaminationsbehandlung zu einer Zeitersparnis und somit zu einer Verringerung der Dosisbelastung des Personals.

Für die Versorgungsleitungen des Manipulators sind in einer bevorzugten Ausgestaltung der Erfindung Mittel zum Aufrechterhalten einer Zugbelastung zwischen dem Manipulator und den Versorgungsleitungen vorgesehen. Dadurch wird innerhalb der Kammer eine Schlaufenbildung der Versorgungsleitungen, beispielsweise des elektrischen Kabels und der Druckschläuche, verhindert.

Der Manipulator enthält vorzugsweise einen Strahlkopf, dessen Strahldüsen derart angeordnet sind, daß der Austritt des Strahlmittels geneigt zur Vorschubrichtung erfolgt. Dieser Neigungswinkel beträgt vorzugsweise zwischen 30 und 60°, insbesondere etwa 45°. Die Strahldüsen können außerdem so angeordnet sein, daß die in der zur Vorschubrichtung senkrechten Ebene liegende Komponente der Austrittsrichtung des Strahlmittels um etwa 45° gegen die radiale Richtung geneigt ist.

Zur weiteren Erläuterung der Erfindung wird auf die in der Zeichnung dargestellten Ausführungsbeispiele verwiesen. In
FIG 1 ist ein Ausführungsbeispiel einer zur Durchführung des Verfahrens gemäß der Erfindung geeigneten Vorrichtung in einem Schnittbild schematisch veranschaulicht.
FIG 2 zeigt eine vorteilhafte Ausgestaltung eines insbesondere für die Reinigung der Innenwand eines Rohrstutzens geeigneten Manipulator. In
FIG 3 ist eine besonders bevorzugte Ausführungsform der Erfindung mit einem im Zentralrohr verschiebbar angeordneten Manipulator in einem Schnittbild schematisch dargestellt;
FIG 4 zeigt in einer Draufsicht eine besonders vorteilhafte Ausführungsform eines auf der Führungsschiene verschiebbaren Manipulators, dessen besonders bevorzugte Ausgestaltung in
FIG 5 in einem Teilschnittbild näher dargestellt ist.

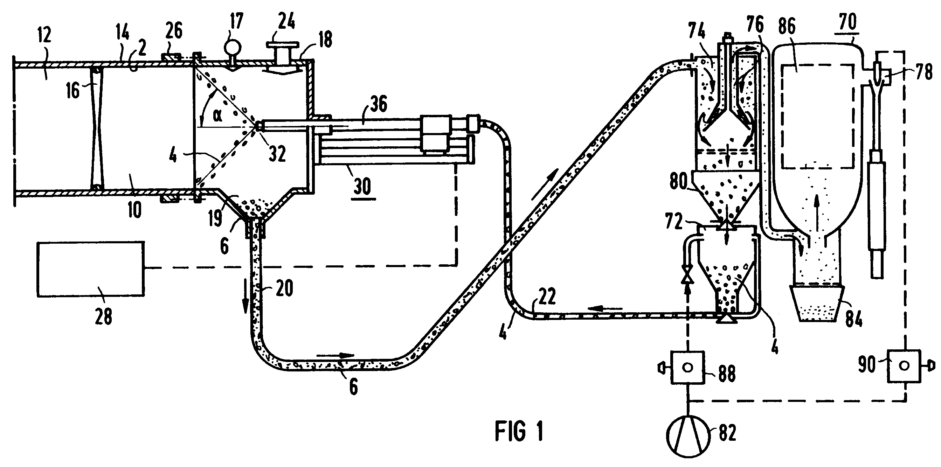

Gemäß FIG 1 ist zur Dekontamination eines Oberflächenbereiches 2, der sich im Innern eines zu einer Rohrleitung 12, beispielsweise eine stationäre Loopleitung, gehörenden Rohrstutzens 14 befindet, eine mechanische Strahlbehandlung vorgesehen. Der Oberflächenbereich 2 wird hierzu mit einem aus einem Strahlkopf 32 austretenden trockenen Strahlmittel 14 beaufschlagt. Die Strahlbehandlung findet in einer Kammer 10 statt, die den zu dekontaminierenden Oberflächenbereich 2 des Rohrstutzens 14 gegenüber dem Außenraum und gegenüber dem Reaktorsystem staubdicht abschließt. Um die Ausbreitung von Strahlmittel und Staub in das Reaktorsystem zu verhindern, wird in die mit dem Reaktorsystem verbundene Rohrleitung 12 eine Dichtscheibe 16 eingesetzt. Auf die Stirnfläche des Rohrstutzens 14 ist über eine Dichtung eine Bearbeitungsglocke 18 aufgesetzt und mit Hilfe eines den Rohrstutzen 14 umfassenden Spannringes 26 fixiert.

Die Bearbeitungsglocke 18 enthält eine staubdichte Durchführung für ein axial im Innern des Rohrstutzens 14 verschiebbares Rohr 36, das an eine Druckleitung 22 angeschlossen ist. Über die Druckleitung 22 wird ein Strahlmittel 4 zugeführt, das aus dem am stirnseitigen Ende des Rohres 36 angeordneten Strahlkopf 32 unter einem Winkel α austritt und gegen die zu dekontaminierende Oberfläche 2 geschleudert wird. Der Winkel α beträgt vorzugsweise zwischen 30° und 60°, insbesondere etwa 45°. Rohr 36 und Strahlkopf 32 bilden einen Manipulator 30, der im Beispiel der Figur pneumatisch entlang einer auf der Bearbeitungsglocke befestigten Führungsstange axial verschoben werden kann. In der Figur ist dies durch ein mit dem Bezugszeichen 28 bezeichnete Pneumatiksteuerung angedeutet.

Die Bearbeitungsglocke 18 enthält außerdem einen Auslaßtrichter 19 zur Aufnahme des anfallenden Strahl/Staubmittel-Gemisches 6. Der Auslaßtrichter 19 ist über eine Durchführung mit einer Saugleitung 20 verbunden, durch die das aus Strahlmittel und Staub bestehende Gemisch 6 abgesaugt wird.

Während der Strahlbehandlung herrscht in der Kammer 10 ein Unterdruck, so daß ein Entweichen von Staub in den außerhalb der Kammer 10 befindlichen Raum nahezu ausgeschlossen werden kann. Zur Überwachung des Druckes in der Kammer 10 ist ein Druckmeßgerät 17 vorgesehen. Außerdem enthält die Bearbeitungsglocke 18 eine mit einem Filter versehene Belüftungsöffnung 24, die bei einer Fehlbedienung der Strahlanlage den Aufbau einer zu hohen Druckdifferenz zwischen der Kammer 10 und dem Außenraum verhindert und Kontamination zurückhält.

Die Bereitstellung des Strahlmittels 4 sowie die Absaugung des Strahlmittel/Staub-Gemisches 6 erfolgt in einer Strahlanlage 70 mit geschlossenem Strahlmittelkreislauf. Solche Strahlanlagen sind beispielsweise aus dem Lehrbuch von I. Horowitz, "Oberflächenbehandlung mittels Strahlmitteln", Bd. 1, 2. Aufl., Essen 1982, Seite 278 und 279 bekannt. Die Saugleitung 20 ist hierzu mit einer Absaugvorrichtung 74 verbunden, die einen Abscheider 76 enthält, mit dem das Strahlmittel aus dem Saugstrom abgeschieden wird. Als Abscheider 76 ist im Ausführungsbeispiel gemäß der Figur ein Zyklon vorgesehen, in dem das Strahlmittel/Staub-Gemisch 6 in zwei Fraktionen mit unterschiedlicher mittlerer Korngröße getrennt wird. Die Fraktion mit der größeren mittleren Korngröße besteht im wesentlichen aus dem Strahlmittel 4 und fällt durch die Wirkung der Schwerkraft in einen Vorratsbehälter 80, von dem aus sie über einen Fallventil einem Druckbehälter 72 zugeführt werden. Der Druckbehälter 72 ist mit der Druckleitung 22 und über ein Stellventil 88 mit einem Kompressor 82 verbunden. In die Druckleitung 22 wird über ein im Boden des Druckbehälters 72 angeordnetes Zuführungsventil das rückgewonnene Strahlmittel 4 eingeschleust und dem Manipulator 30 zugeführt. Zur Erzeugung des in der Absaugvorrichtung 74 zum Absaugen des Strahlmittel/Staub-Gemisches 6 und zum Betrieb des Zyklons erforderlichen unterdruckes ist ein mit Druckgas betriebener Injektor 78 vorgesehen, der über ein Stellventil 90 ebenfalls mit dem Kompressor 82 verbunden ist. Zwischen dem Zyklon und dem Injektor 78 befindet sich ein Filterbehälter 86, in dem das vom Injektor angesaugte und nach Verlassen des Zyklons noch den radioaktiven Staut führende Druckgas durch ein Aerosolfilter gereinigt wird, bevor es in den Außenraum austritt. Der vom Zyklon an den Filterbehälter 86 weitergeleitete Staub, der im wesentlichen aus Teilchen mit geringer Korngröße besteht, enthält sowohl die von der Oberfläche 2 abgetragenen radioaktiv kontaminierten Partikel als auch zerschlagene Teilchen des Strahlmittels. Durch die Querschnittserweiterung am Eingang des Filterbehälters erfolgt eine Verringerung der Strömungsgeschwindigkeit und der Staub setzt sich durch die Wirkung der Schwerkraft in einem Staubbehälter 84 ab. Der aus dem Saugstrom abgeschiedene Staub ist hoch radioaktiv und kann durch Abnahme des Staubbehälters 84 der weiteren Entsorgung zugeführt werden. Durch die Rückgewinnung des Strahlmittels 4 ist die anfallende Staubmenge gering und die Entsorgung vereinfacht.

Im Ausführungsbeispiel gemäß FIG 2 ist ein auf Rädern fahrbarer Manipulator 40 vorgesehen, mit dem auch gekrümmte Rohrstutzen 15 dekontaminiert werden können. Der fahrbare Manipulator 40 ist mit einem Strahlkopf 42 versehen, der zwei Strahldüsen 44 hat, die in einem Winkel von etwa 45° gegen die Mittenachse geneigt sind. Der Manipulator 40 ist an die Druckleitung 22 angeschlossen, die durch eine entsprechende Durchführung der Bearbeitungsglocke 18 zugeführt wird. Der Strahlkopf 42 ist um die Mittenachse des Manipulators 40 drehbar gelagert. Die Drehbewegung kann verursacht werden durch die beim Ausströmen des Strahlmittels aus den Strahldüsen 44 bei geeigneter Anordnung entstehenden tangentialen Kraftkomponenten. Vorzugsweise ist jedoch ein in der Figur nicht näher gezeigter elektrischer Antrieb für die Rotationsbewegung des Strahlkopfes 42 vorgesehen.

Die Vorschubbewegung des Manipulators 40 erfolgt ebenfalls durch einen in der Figur nicht näher dergestellten elektrischen Antrieb. Die Energieversorgung der elektrischen Antriebe erfolgt über ein elektrisches Versorgungskabel 25, das ebenfalls staubdicht durch die Bearbeitungsglocke 18 hindurchgeführt wird. Am Manipulator 40 ist außerdem ein mit der Saugleitung 20 verbundener Saugstutzen 49 befestigt, mit dem das sich am Boden des Rohrstutzens 15 ansammelnde Strahlmittel/Staub-Gemisch 6 abgesaugt wird.

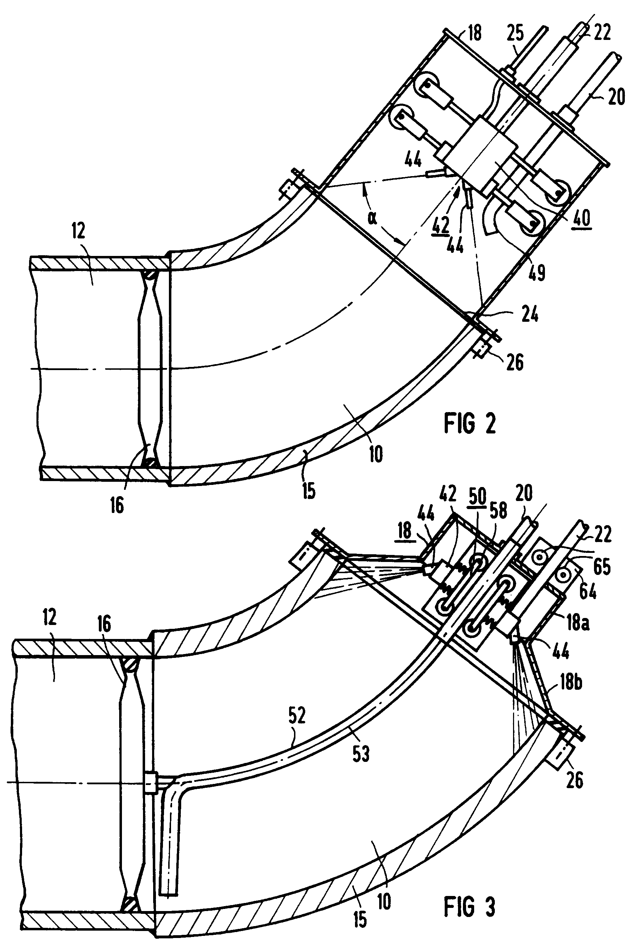

In der Ausführungsform nach FIG 3 ist ein Manipulator 50 vorgesehen, der auf einer hohlen Führungsschiene 52 geführt wird. Die Führungsschiene 52 ist an die Form des Rohrstutzens 15 angepaßt und mittig innerhalb des Rohrstutzens 15 verlegt. An ihrem innerhalb des Rohrstutzens 15 befindlichen Ende ist die Führungsschiene 52 offen. Am anderen Ende ist sie mit der Saugleitung 20 verbunden. Die Führungsschiene 52 wird im Beispiel der Figur an einem Ende von der Bearbeitungsglocke 18 und am anderen Ende von der in die Rohrleitung 12 eingeführten Dichtscheibe 16 gehaltert. Am Ende des Rohrstutzens 15 ist die Führungsschiene 52 im Bereich der Dichtscheibe 16 zur Innenwand des Rohrstutzens 15 hin gebogen, so daß sie mit ihrer Öffnung zur tiefsten Stelle des Rohrstutzens 15 hinzeigt. Die Führungsschiene 52 ist durch die Bearbeitungsglocke 18 staubdicht geführt und an die Saugleitung 20 angeschlossen. Durch diese Gestaltung wird das beim Strahlen anfallende Strahlmittel/Staub-Gemisch, das sich an den tiefsten Stellen des Rohrstutzens 15 ansammelt, besonders wirksam abgesaugt. Die Führungsschiene 52 hat vorzugsweise die Gestalt eines Hohlprofils mit zwei gegenüberliegenden Flachseiten, die zur Aufnahme eines auf Rollen 58 fahrbaren Manipulators 50 dienen. Die Rollen 58 des Manipulators 50 werden durch Federn an die Flachseiten der Führungsschiene 52 gepreßt.

Der Manipulator 50 trägt einen um die Mittellinie 53 der Führungsschiene 52 drehbaren Strahlkopf 42 mit zwei Strahldüsen 44, die unter einem Winkel von etwa 45° gegen die Mittellinie 53 der Führungsschiene 52 nach außen geneigt sind.

Die Bearbeitungsglocke 18 ist mit Einrichtungen 64 versehen, die über elektrisch oder pneumatisch angetriebene und gegen die Druckleitung 22 sowie gegen die in der Figur nicht dargestellen elektrischen Versorgungskabel gepreßte Reibrollen 65 dafür sorgt, daß stets eine Zugkraft zwischen dem Manipulator 50 und der Druckleitung 22 sowie der elektrischen Versorgungskabel herrscht. Dadurch wird eine Schlaufenbildung der Versorgungskabel und des Druckleitungsschlauches im Rohrstutzen 15 verhindert.

Die Bearbeitungsglocke 18 ist vorzugsweise aus zwei Teilen 18a und 18b staubdicht und lösbar zusammengesetzt. Der mit dem Rohrstutzen 15 verbundene Teil 18b kann leicht ausgetauscht werden und ist an die Nennweite des zu dekontaminierenden Rohrstutzens 15 angepaßt. Das in seiner mechanischen Gestaltung aufwendigere Teil 18a ist dann für Rohrstutzen unterschiedlicher Nennweite verwendbar. Lediglich die hohle Führungsschiene 52 muß in ihrer Form und in ihren Ausmaßen an den zu dekontaminierenden Rohrstutzen 15 angepaßt werden.

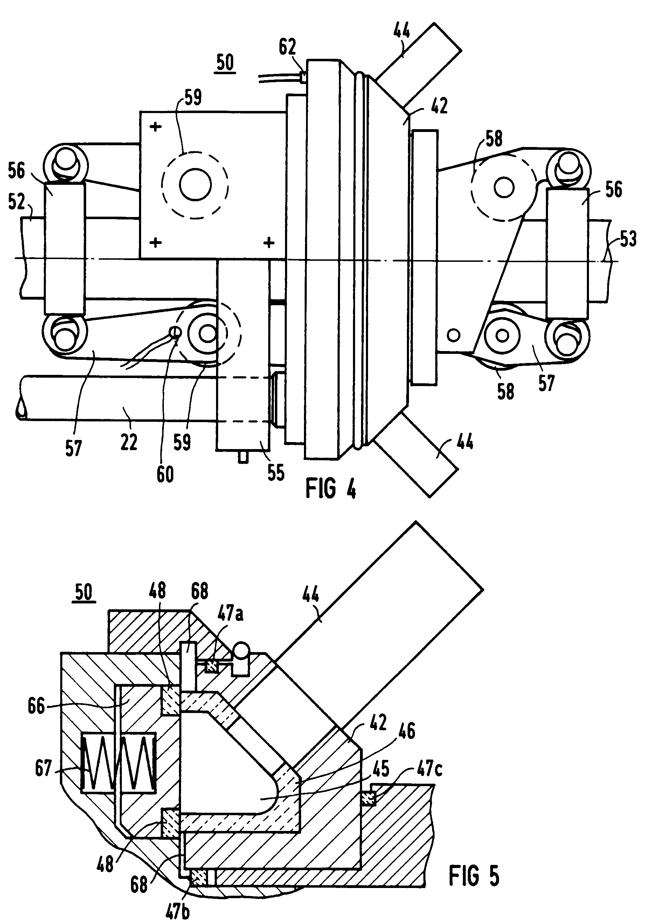

Gemäß FIG 4 enthält ein längs der Führungsschiene 52 axial verschiebbarer Manipulator 50 vier Rollen 58 und 59, die jeweils paarweise über eine Wippe 57 und eine Zugfeder 56 gegen die Flachseiten der Führungsschiene 52 gepreßt werden. Der Manipulator 50 enthält einen mit der Druckleitung 22 verbundenen Strahlkopf 42 mit zwei gegen die Mittellinie 53 der Führungsschiene 52 um 45° geneigten Strahldüsen 44. Der Strahlkopf 42 wird von einem in der Figur nicht sichtbaren elektrischen Antrieb in eine Drehbewegung um die Mittellinie 53 versetzt. Der Vorschub des Manipulators 50 entlang der Führungsschiene 52 erfolgt ebenfalls über einen auf eine Reibrolle 59 wirkenden elektrischen Antrieb 55. Die Vorschubbewegung des Manipulators 50 und die Drehbewegung des Strahlkopfes 42 werden jeweils mit einer elektrischen Einrichtung 60 bzw. 62 zur Drehzahlmessung erfaßt.

Gemäß FIG 5 enthält der Manipulator 50 einen rotierenden Strahlkopf 42 mit einem ringförmig im Manipulator 50 umlaufenden Kanal 45 mit dreieckförmigem Querschnitt. Der Kanal 45 wird von einem an einer Seitenfläche offenen Keramikeinsatz 46 gebildet. Die offene Seitenfläche des Keramikeinsatzes 46 hat die Gestalt eines Kreisrings und ermöglicht die Zuführung des Strahlmittels aus der mit dem starren Teil des Manipulators 50 verbundenen Druckleitung 22 (Figur 4) während der gesamten Drehbewegung des Strahlkopfes 42. Durch den Kanal 45 wird das Strahlmittel an die in der Figur nur in einer Draufsicht dargestellten Strahldüse 44 geleitet. Der Strahlkopf 42 ist über Gleitdichtungen 47a, b, c und 48 im starren Gehäuse des Manipulators 50 drehbar gelagert. Die Gleitdichtungen 47a, b, c und 48 bestehen vorzugsweise aus einem keramischen Werkstoff. Die beiden am Keramikeinsatz 46 anliegenden Gleitdichtungen 48 dichten den vom Strahlmittel durchsetzten Kanal 45 gegen den nichtrotierenden Gehäuseteil des Manipulators 50 ab. Um eine ausreichende Dichtwirkung herbeizuführen, sind die Gleitdichtungen 48 auf einem Halter 66 angeordnet, der von einer Feder 67 gegen die an der offenen Seitenfläche des Keramikeinsatzes 46 befindlichen kreisringförmigen Stirnflächen des Keramikeinsatzes 46 gepreßt wird. Die auf diese Weise gebildeten Dichtflächen zwischen den nicht rotierenden Gleitdichtungen 48 und dem rotierenden Keramikeinsatz 46 werden an ihren äußeren, vom Kanal 45 abgewandten Rändern jeweils von einem ebenfalls ringförmigen Hohlkanal 68 umgeben. Diese Hohlkanäle 68 sind mit gefiltertem Druckgas derart beaufschlagt, daß sich in ihnen ein Druck einstellt, der geringfügig höher ist als der im Kanal 45 herrschende Druck. Die Gleitdichtungen 47a und 47b verhindern, daß das in die Hohlkanäle 68 eingeleitete Druckgas ungehindert in den Außenraum entweicht. Bei einem Arbeitsdruck innerhalb des Kanals 45 von beispielsweise etwa 6 bar wird in den Hohlkanälen 68 ein Druck von etwa 6,2 bar eingestellt. Über die Dichtflächen zwischen den Gleitdichtungen 48 und dem Keramikeinsatz 46 wird somit stets eine ins Innere des Kanals 45 gerichtete Strömung aus gefiltertem Druckgas geführt. Durch diese Maßnahme wird die Ausbreitung von Strahlmittel in den zwischen den Gleitdichtungen 48 und den Stirnflächen des Keramikeinsatzes 46 befindlichen Zwischenraum verhindert. Ein Verschleiß der Dichtflächen durch eine Schmirgelwirkung des Strahlmittels ist durch diese Maßnahme deutlich verringert. Ein Manipulator 50 mit einem derart gestalteten Strahlkopf 42 kann über lange Zeit betrieben werden, ohne daß ein Austausch der Gleitdichtung 48 und die Durchführung von Reinigungsmaßnahmen erforderlich ist. Durch den Wegfall zusätzlicher Wartungsarbeiten am Manipulator 50 während der Durchführung der Dekontamination wird der Zeitbedarf für die Strahlbehandlung und somit die Dosisbelastung des Betriebspersonals weiter reduziert.

## Patentansprüche

1. Verfahren zur Dekontamination eines innerhalb eines an einem Ende offenen Rohres, Stutzens oder Behälters radioaktiv kontaminierten Oberflächenbereiches (2) mit folgenden Merkmalen:
a) Der zu dekontaminierende Oberflächenbereich (2) wird von einer nach außen staubdicht abgeschlossenen und unter Unterdruck stehenden Kammer (10) umgeben, die aus dem zu dekontaminierenden Oberflächenbereich (2), einen in das Rohr, den Stutzen bzw. in den Behälter eingeführten Dichtelement (16), das den Bearbeitungsraum vom restlichen Bereich des Rohres, Stutzens bzw. Behälters trennt, und einer auf das offene Ende aufgesetzten Bearbeitungsglocke (18) gebildet wird, und mit einem trockenen mechanischen Strahlmittel (4) beaufschlagt,
b) das Strahlmittel (4) wird aus einem Druckbehälter (72) einer mit Druckgas betriebenen und nach außen staubdicht abgeschlossenen Strahlanlage (70) zugeführt,
c) das Strahlmittel (4) und der beim Strahlen anfallende Staub (8) werden gemeinsam mit einem Saugstrom aus der Kammer (10) abgesaugt, in der Strahlanlage (70) in zwei Fraktionen mit unterschiedlicher mittlerer Korngröße getrennt, und nacheinander aus dem Saugstrom abgeschieden,
d) die Fraktion mit der größeren mittleren Korngröße wird kontinuierlich dem Druckbehälter (72) zur Weiterverwendung zugeführt, und
e) die Fraktion mit der kleineren mittleren Korngröße wird in einem Staubbehälter (84) gesammelt.

2. Verfahren nach Anspruch 1, **dadurch gekennzeichnet,** daß in einem ersten Verfahrensschritt mit einem kantigen Strahlmittel und in einem zweiten Verfahrensschritt mit einem kugeligen Strahlmittel gestrahlt wird.

3. Verfahren nach einem der vorhergehenden Ansprüche, **dadurch gekennzeichnet,** daß die Bearbeitungsglocke (18) Durchführungen für die zur Absaugung und zur Zuführung des Strahlmittels erforderlichen Saug- bzw. Druckleitungen (20 bzw. 22) sowie für die zur Bewegung eines einen Strahlkopf (32) enthaltenden und innerhalb des Rohrstutzens (14) bewegbaren Manipulators (30) erforderlichen Mittel enthält.

4. Vorrichtung zur Dekontamination eines radioaktiv kontaminierten Oberflächenbereiches (2) mit einem trockenen mechanischen Strahlmittel (4), der sich im Innern eines an einem Ende offenen Rohres, Stutzens oder Behälters befindet, mit folgenden Merkmalen:
a) die Vorrichtung enthält einen im Innern des Rohres oder Behälters bewegbaren Manipulator (30) mit einem Strahlkopf (32),
b) der Strahlkopf (32) ist über eine Druckleitung (22) an eine nach außen staubdicht abgeschlossene und mit Druckgas aus einem Druckbehälter (72) betreibbare Strahlanlage (70) mit geschlossenem Strahlmittelkreislauf angeschlossen,
c) der zu dekontaminierende Oberflächenbereich (2) ist in einer staubdichten und unter Unterdruck stehenden Kammer (10) angeordnet, die aus dem zu dekontaminierenden Oberflächenbereich (2), einem in das Rohr den Stutzen bzw. in den Behälter eingeführten Dichtelement (16), das den Bearbeitungsraum vom restlichen Bereich des Rohres, Stutzens bzw. Behälters trennt, und einer auf das offene Ende aufgesetzten Bearbeitungsglocke (18) gebildet ist,
d) die Kammer (10) ist über eine Saugleitung (20) an die Strahlanlage (70) angeschlossen,
e) die Saugleitung (20) ist an Einrichtungen (76) zum Trennen des trockenen Strahlmittel/Staub-Gemisches (4, 8) in zwei Fraktionen mit unterschiedlicher Korngröße angeschlossen, wobei die Fraktion mit der größeren mittleren Korngröße kontinuierlich dem Druckbehälter (72) zuführbar ist.

5. Vorrichtung nach Anspruch 4, **dadurch gekennzeichnet,** daß die Strahlanlage (70) einen Abscheider (76) für die Trennung des abgesaugten Materials in zwei Fraktionen mit unterschiedlicher Korngrößenverteilung enthält.

6. Vorrichtung nach Anspruch 5, **dadurch gekennzeichnet,** daß als Abscheider (76) ein Zyklon vorgesehen ist.

7. Vorrichtung nach Anspruch 6, **dadurch gekennzeichnet,** daß die Strahlanlage (70) einen mit Druckluft betriebenen Injektor (78) zur Erzeugung eines Unterdrucks enthält.

8. Vorrichtung nach Anspruch 6, **dadurch gekennzeichnet,** daß zur Erzeugung des Unterdruckes ein Gebläse vorgesehen ist.

9. Vorrichtung nach einem der Ansprüche 4 bis 8, **dadurch gekennzeichnet,** daß eine auf dem offenen Ende des zu behandelnden Rohres oder Behälters staubdicht aufsetzbare Bearbeitungsglocke (18) vorgesehen ist.

10. Vorrichtung nach Anspruch 9, **dadurch gekennzeichnet,** daß die Bearbeitungsglocke (18) eine mit einem Filter versehene Belüftungsöffnung (24) enthält.

11. Vorrichtung nach einem der Ansprüche 4 bis 10, **dadurch gekennzeichnet,** daß der Strahlkopf (32) auf einem axial verschiebbaren und mit der Druckleitung (22) verbundenen Rohr (36) angeordnet ist.

12. Vorrichtung nach einem der Ansprüche 4 bis 10, **dadurch gekennzeichnet,** daß der Strahlkopf (42) drehbar auf einem auf Rädern innerhalb des Rohres oder Behälters fahrbaren und mit einer Druckleitung (22) verbundenen Manipulator (40) angeordnet ist.

13. Vorrichtung nach Anspruch 12, **dadurch gekennzeichnet,** daß der Manipulator (40) an eine Saugleitung (20) angeschlossen ist.

14. Vorrichtung nach einem der Ansprüche 4 bis 10, **dadurch gekennzeichnet,** daß ein auf einer hohlen Führungsschiene (52) in Richtung ihrer Mittellinie (53) verschiebbar angeordneten Manipulator (50) vorgesehen ist, der einen Strahlkopf (42) mit wenigstens einer Strahldüse (44) enthält, wobei der Strahlkopf (42) auf dem Manipulator (50) drehbar um die Mittellinie (53) der Führungsschiene (52) angeordnet ist und die Führungsschiene (52) an ihrem einen Ende offen und an ihrem anderen Ende an die Saugleitung (20) angeschlossen ist.

15. Vorrichtung nach Anspruch 14, **dadurch gekennzeichnet,** daß die Führungsschiene (52) ein Hohlprofil mit zwei einander gegenüberliegenden Flachseiten hat, die einen Manipulator (50) mit an diese Flachseiten anpreßbaren Rollen (58, 59) aufnehmen.

16. Vorrichtung nach nach einem der Ansprüche 14 oder 15, **dadurch gekennzeichnet,** daß eine Einrichtung (60) zum Erfassen der Vorschubbewegung des Manipulators (50) vorgesehen ist.

17. Vorrichtung nach einem der Ansprüche 14 bis 16, **dadurch gekennzeichnet,** daß eine Einrichtung (62) zum Erfassen der Drehbewegung des Strahlkopfes (42) vorgesehen ist.

18. Vorrichtung nach einem der Ansprüche 14 bis 17, **dadurch gekennzeichnet,** daß für die Versorgungsleitungen des Manipulators Mittel (64) zum Aufrechterhalten einer Zugbelastung zwischen den Manipulator (40, 50) und den Versorgungsleitungen vorgesehen sind.

19. Vorrichtung nach einem der Ansprüche 14 bis 18, **dadurch gekennzeichnet,** daß die Strahldüsen (44) derart angeordnet sind, daß der Austritt des Strahlmittels geneigt zur Vorschubrichtung erfolgt.

20. Vorrichtung nach Anspruch 19, **dadurch gekennzeichnet,** daß der Winkel dieser Neigung zwischen 30 und 60° beträgt.

21. Vorrichtung nach einem der Ansprüche 14 bis 20, **dadurch gekennzeichnet,** daß die Strahldüsen (44) derart angeordnet sind, daß die in einer zur Vorschubrichtung senkrechten Ebene liegenden Komponenten der Austrittsrichtung des Strahlmittels um etwa 45° zur radialen Richtung geneigt sind.

22. Vorrichtung nach einem der Ansprüche 14 bis 21 mit einem Manipulator (50) mit folgenden Merkmalen:
a) der Manipulator (50) enthält einen über Gleitdichtungen (47a, b, c, 48) drehbar gelagerten Strahlkopf (42) mit einem Kanal (45) für das Strahlmittel,
b) der Kanal (45) steht in Verbindung mit einem Teil der Gleitdichtungen (48),
c) der Manipulator (50) enthält Mittel zum Aufrechterhalten einer über die von diesen Gleitdichtungen (48) gebildeten Dichtflächen in den Kanal (45) gerichteten Strömung aus gefiltertem Druckgas.

## Claims

1. A method of decontaminating a surface region (2) contaminated with radioactivity and located inside a pipe, pipe connector or container which is open at one end, having the following features:
a) The surface region (2) to be decontaminated is surrounded by a chamber (10), which is sealed in a dust-tight manner with respect to the outside and is under partial vacuum, said chamber (10) being formed from the surface region (2) to be decontaminated, a sealing element (16) introduced into the pipe, the pipe connector or the container, which separates the working space from the remaining region of the pipe, pipe connector or container, and a working bell (18) placed on the open end, and said surface region being acted upon with a dry mechanical blast-cleaning agent (4),
b) the blast-cleaning agent (4) is supplied from a pressurised container (72) of a blast-cleaning system (70) which is operated with compressed gas and sealed in a dust-tight manner with respect to the outside,
c) the blast-cleaning agent (4) and the dust (8) generated during the blast-cleaning, are extracted together from the chamber (10) by a suction flow, are separated into two fractions of different average grain sizes in the blast-cleaning system (70), and are separated from the suction flow one after another,
d) the fraction with the larger average grain size is continuously supplied to the pressurised container (72) for reuse,
e) the fraction with the smaller average grain size is collected in a dust collector (84).

2. A method according to claim 1, characterised in that a sharp-edged blast-cleaning agent is blasted in a first step of the method and a spherical blast-cleaning agent is blasted in a second step of the method.

3. A method according to one of the preceding claims, characterised in that the working bell (18) contains openings for the suction and pressure lines (20 and 22) required to extract and supply the blast-cleaning agent and for the means needed in order to move a manipulator (30) which incorporates a blast-cleaning head (32) and is movable inside the pipe connector (14).

4. An apparatus for decontaminating a surface region (2) contaminated with radioactivity with a dry mechanical blast-cleaning agent (4), which is located in the interior of a pipe, pipe connector or container which is open at one end, having the following features:
a) the apparatus contains a manipulator (30), which is movable in the interior of the pipe or container, having a blast-cleaning head (32),
b) the blast-cleaning head (32) is connected, via a pressure line (22), to a blast-cleaning system (70), having a closed blast-cleaning agent circuit, which is sealed in a dust-tight manner with respect to the outside and is driveable with compressed gas from a pressurised container (72),
c) the surface region (2) to be decontaminated is arranged in a chamber (10) which is dust-tight and under partial vacuum, said chamber (10) being formed from the surface region (2) to be decontaminated, a sealing element (16) introduced into the pipe, the pipe connector or the container, said sealing element (16) separating the working space from the remaining region of the pipe, pipe connector or container, and a working bell (18) placed on the open end,
d) the chamber (10) is connected to the blast-cleaning system (70) via a suction line (20),
e) the suction line (20) is connected to devices (76) for separating the dry blast-cleaning agent/dust mixture (4, 8) into two fractions of different grain sizes, wherein the fraction with the larger average grain size is continuously suppliable to the pressurised container (72).

5. An apparatus according to claim 4, characterised in that the blast-cleaning system (70) incorporates a separator (76) for separating the extracted material into two fractions with different grain size distributions.

6. An apparatus according to claim 5, characterised in that a centrifugal separator is provided as the separator (76).

7. An apparatus according to claim 6, characterised in that the blast-cleaning system (70) incorporates an injector (78), driven with compressed air, for generating a partial vacuum.

8. An apparatus according to claim 6, characterised in that a blower is provided for generating the partial vacuum.

9. An apparatus according to one of claims 4 to 8, characterised in that a working bell (18) is provided, said working hell (18) being placeable in a dust-tight manner on the open end of the pipe or container to be treated.

10. An apparatus according to claim 9, characterised in that the working bell (18) incorporates a ventilation opening (24) provided with a filter.

11. An apparatus according to one of claims 4 to 10, characterised in that the blast-cleaning head (32) is arranged on a pipe (36) which is axially displaceable and connected to the pressure line (22).

12. An apparatus according to one of claims 4 to 10, characterised in that the blast-cleaning head (42) is rotatably arranged on a manipulator (40) which is movable on wheels inside the pipe or container and is connected to a pressure line (22).

13. An apparatus according to claim 12, characterised in that the manipulator (40) is connected to a suction line (20).

14. An apparatus according to one of claims 4 to 10, characterised in that a manipulator (40) is provided, said manipulator (40) being arranged on a hollow guide rail (52), displaceably in the direction of the centre line (53) thereof, and incorporating a blast-cleaning head (42) with at least one blast-cleaning nozzle (44), wherein the blast-cleaning head (42) is arranged on the manipulator (40), rotatably about the centre line (53) of the guide rail (52), and the guide rail (52) is open at one end and is connected to the suction line (20) at the other end.

15. An apparatus according to claim 14, characterised in that the guide rail (52) has a hollow profile with two opposing flat sides which accommodate a manipulator (50) having rollers (58, 59) which are pressable against said flat sides.

16. An apparatus according to one of claims 14 or 15, characterised in that a device (60) is provided for determining the advancing movement of the manipulator (50).

17. An apparatus according to one of claims 14 to 16, characterised in that a device (62) is provided for detecting the rotary movement of the blast-cleaning head (42).

18. An apparatus according to one of claims 14 to 17, characterised in that means (64) for maintaining a tensile load between the manipulator (40, 50) and the supply lines are provided for the supply lines.

19. An apparatus according to one of claims 14 to 18, characterised in that the blast-cleaning nozzles (44) are arranged such that the blast-cleaning agent emerges inclined at an angle to the advancing direction.

20. An apparatus according to claim 19, characterised in that this angle of inclination is between 30 and 60°.

21. An apparatus according to one of claims 14 to 20, characterised in that the blast-cleaning nozzles (44) are arranged such that the components of the direction of emergence of the blast-cleaning agent, lying in a plane perpendicular to the advancing direction, are inclined by approximately 45° to the radial direction.

22. An apparatus according to one of claims 14 to 21 having a manipulator (50) with the following features:
a) the manipulator (50) incorporates a blast-cleaning head (42), which is pivotably mounted via sliding seals (47a, b, c, 48), having a channel (45) for the blast-cleaning agent,
b) the channel (45) communicates with a portion of the sliding seals (48),
c) the manipulator (50) contains means for maintaining a flow of filtered compressed gas, directed into the channel (45), via the sealing surfaces formed by said sliding seals (48).

## Revendications

1. Procédé pour la décontamination d'une zone superficielle (2) contaminée par voie radioactive à l'intérieur d'un tube, d'une tubulure ou d'un récipient ouvert à une extrémité, présentant les caractéristiques suivantes :
a) la zone superficielle à décontaminer (2) est entourée par une chambre (10), qui est fermée d'une manière étanche à la poussière en direction de l'extérieur et est placée en dépression et qui est formée par la zone superficielle à décontaminer (2), par un élément d'étanchéité (16) introduit dans la tubulure ou le récipient et qui sépare l'espace de travail par rapport à la zone restante du tube, de la tubulure ou du récipient, et par une cloche de traitement (18) apposée sur l'extrémité ouverte, et qui est chargée par un agent de sablage mécanique sec (4),
b) l'agent de sablage (4) est envoyé à partir d'un récipient sous pression (72) à une installation de sablage (70) entraînée par un gaz comprimé et fermée, en direction de l'extérieur, d'une manière étanche à la poussière,
c) l'agent de sablage (4) et la poussière (8), qui apparaît lors de sablage, sont aspirés en commun avec un courant d'aspiration à partir de la chambre (17), sont séparés dans l'installation de sablage (70) en deux fractions dont les tailles moyennes des grains sont différentes et qui sont séparées ensuite du courant d'aspiration,
d) la fraction, dont la taille moyenne des grains est supérieure, est envoyée en continu au récipient sous pression (72) en vue de son utilisation ultérieure,
e) la fraction, dont les grains possèdent une taille moyenne inférieure, est collectée dans un récipient à poussière (84).

2. Procédé suivant la revendication 1, caractérisé par le fait que lors d'une première étape opératoire, on projette un agent de sablage à configuration anguleuse et lors d'une seconde étape opératoire, on projette un agent de sablage sphérique.

3. Procédé suivant l'une des revendications précédentes, caractérisé par le fait que la cloche de traitement (18) contient des passages pour les conduites d'aspiration ou de pression (20 ou 22), qui sont nécessaires pour l'aspiration et l'envoi de l'agent de sablage, ainsi que les moyens nécessaires pour déplacer un manipulateur (30), qui comporte une tête de sablage (32) et est déplaçable à l'intérieur de la tubulure (14).

4. Dispositif pour décontaminer à l'aide d'un agent de grenaillage mécanique sec (4), une zone superficielle (2) contaminée par voie radioactive, située à l'intérieur d'un tube, d'une tubulure ou d'un récipient ouvert à une extrémité, présentant les caractéristiques suivantes :
a) le dispositif comporte un manipulateur (30), qui est déplaçable à l'intérieur du tube du récipient et comporte une tête de sablage (32),
b) la tête de sablage (32) est raccordée par l'intermédiaire d'une conduite de pression (22) à une installation de sablage (70) qui est fermée en direction de l'extérieur d'une manière étanche à la poussière et peut être entraînée par un gaz sous pression délivré d'un récipient sous pression (72) et qui comporte un circuit fermé de l'agent de sablage,
c) la zone superficielle à décontaminer (2) est disposée dans une chambre (10), qui est, fermée d'une manière étanche à la poussière en direction de l'extérieur et est placée en dépression et qui est formée par la zone superficielle à décontaminer (2), par un élément d'étanchéité (16) introduit dans la tubulure ou le récipient et qui sépare l'espace de travail par rapport à la zone restante du tube, de la tubulure ou du récipient, et par une cloche de traitement (18) apposée sur l'extrémité ouverte,
d) la chambre (10) est raccordée à l'installation de sablage (70) par l'intermédiaire d'une canalisation d'aspiration (20),
e) la canalisation d'aspiration (20) est raccordée à des dispositifs (76) servant à séparer le mélange agent de sablage sec/poussière (4,8) en deux fractions, dont les grains ont des tailles différentes, la fraction, dont la taille moyenne des grains est supérieure, pouvant être envoyée continûment au récipient sous pression (72).

5. Dispositif suivant la revendication 4, caractérisé par le fait que l'installation de sablage (70) comporte un séparateur (76) servant à séparer le matériau aspiré, en deux fractions, dont les distributions des tailles des grains sont différentes.

6. Dispositif suivant la revendication 5, caractérisé par le fait qu'un cyclone est prévu en tant que séparateur (76).

7. Dispositif suivant la revendication 6, caractérisé par le fait que l'installation de sablage (70) comporte un injecteur (78) entraîné par air comprimé et servant à produire une dépression.

8. Dispositif suivant la revendication 6, caractérisé par le fait qu'une soufflante est prévue pour l'obtention de la dépression.

9. Dispositif suivant l'une des revendications 4 à 8, caractérisé par le fait qu'il est prévu une cloche de traitement (18), qui peut être apposée sur l'extrémité ouverte du tube ou du récipient à traiter, d'une manière étanche à la poussière.

10. Dispositif suivant la revendication 9, caractérisé par le fait que la cloche de traitement (18) comporte une ouverture d'aération (24) pourvue d'un filtre.

11. Dispositif suivant l'une des revendications 4 à 10, caractérisé par le fait que la tête de sablage (32) est disposée sur un tube (36) qui est déplaçable axialement et est relié à la conduite de pression (22).

12. Dispositif suivant l'une des revendications 4 à 10, caractérisé par le fait que la tête de sablage (42) est montée de manière à pouvoir tourner sur un manipulateur (40), qui est déplaçable sur des roues à l'intérieur du tube ou du récipient et est relié à une conduite de pression (22).

13. Dispositif suivant la revendication 12, caractérisé par le fait que le manipulateur (40) est raccordé à une conduite d'aspiration (20).

14. Dispositif suivant l'une des revendications 4 à 10, caractérisé par le fait qu'il est prévu un manipulateur (50), qui est déplaçable sur un rail de guidage creux (52) dans la direction de sa ligne médiane (53) et qui contient une tête de sablage (42) comportant au moins une buse de sablage (44), la tête de sablage (42) étant montée sur le manipulateur (5) de manière à pouvoir tourner autour de la ligne médiane (53) du rail de guidage (52), tandis que le rail de guidage (52) est ouvert au niveau de l'une de ses extrémités et est raccordé, par son autre extrémité, à la conduite d'aspiration (20).

15. Dispositif suivant la revendication 14, caractérisé par le fait que le rail de guidage (54) possède un profil creux comportant des côtés plats réciproquement en vis-à-vis, qui reçoivent un manipulateur (50) comportant des galets (58,59) pouvant être repoussés contre ces côtés plats.

16. Dispositif suivant l'une des revendications 14 ou 15, caractérisé par le fait qu'il est prévu un dispositif (60) pour détecter le déplacement d'avance du manipulateur (50).

17. Dispositif suivant l'une des revendications 14 à 16, caractérisé par le fait qu'il est prévu un dispositif (62) pour détecter le mouvement de rotation de la tête de sablage (42).

18. Dispositif suivant l'une des revendications 14 à 17, caractérisé par le fait que pour les conduites d'alimentation du manipulateur, il est prévu des moyens (64) pour maintenir une contrainte de traction entre le manipulateur (40,50) et les conduites d'alimentation.

19. Dispositif suivant l'une des revendications 14 à 18, caractérisé par le fait que les buses de sablage (44) sont disposées de telle sorte que la sortie de l'agent de sablage s'effectue d'une manière inclinée par rapport à la direction d'avance.

20. Dispositif suivant la revendication 19, caractérisé en ce que l'angle d'inclinaison est compris entre 40 et 60°.

21. Dispositif suivant l'une des revendications 14 à 20, caractérisé par le fait que les buses de sablage (44) sont disposées de telle sorte que les composantes, situées dans un plan perpendiculaire à la direction d'avance, de la direction de sortie de l'agent de sablage sont inclinées d'environ 45° par rapport à la direction radiale.

22. Dispositif suivant l'une des revendications 14 à 21, comportant un manipulateur (50), présentant les caractéristiques suivantes :
a) le manipulateur (50) comporte une tête de sablage (42), qui est montée rotative au moyen de garnitures d'étanchéité coulissantes (47a,b,c, 48) et qui est pourvu d'un canal (45) pour l'agent de sablage,
b) le canal (45) est relié à une partie des garnitures d'étanchéité coulissantes (48),
c) le manipulateur (50) comporte des moyens pour maintenir un écoulement de gaz sous pression filtré, qui est dirigé dans le canal (45) par l'intermédiaire des surfaces d'étanchéité formées par ces garnitures d'étanchéité coulissantes (48).
